# NEUE EUROPÄISCHE PATENTSCHRIFT

(11) **EP 1 419 319 B2**
(45) Veröffentlichungstag und Bekanntmachung des Hinweises auf die Entscheidung über den Einspruch: **01.04.2009**
(45) Hinweis auf die Patenterteilung: 08.12.2004
(21) Anmeldenummer: 02767114.8
(22) Anmeldetag: 22.08.2002
(51) Int. Cl.: F16B 37/06

(54) **SELBSTLOCHENDES, VERDREH- UND AUSPRESSSICHER IN EIN BLECH EINPRESSBARES BEFESTIGUNGSELEMENT.**
SELF-PIERCING FIXING ELEMENT THAT CAN BE PRESS-FITTED TO SHEET METAL IN A TORSION AND EXPULSION-PROOF MANNER
ELEMENT DE FIXATION AUTO-PERCEUR POUVANT ETRE ENFONCE DANS UNE TOLE SANS RISQUE DE TORSION ET D'EXPULSION

(30) Priorität: 22.08.2001 DE 20113853 U
(43) Veröffentlichungstag der Anmeldung: 19.05.2004
(73) Patentinhaber: Acument GmbH & Co. OHG, 56567 Neuwied (DE)
(72) Erfinder: ROSS, Gerold, 56170 Bendorf (DE); LUDWIG, Detlef, 97996 Niederstetten (DE)
(74) Vertreter: Beck, Alexander
(86) Internationale Anmeldenummer: PCT/DE2002/003077
(87) Internationale Veröffentlichungsnummer: WO 2003/019019

(56) Entgegenhaltungen:
- EP-A- 0 561 715
- US-A- 3 213 914
- US-A- 3 253 631
- US-B1- 6 220 804
- AFT INC. RIMS-PROSPEKT November 1999, LINCOLNWOOD, ILLINOIS USA,

## Beschreibung

Die vorliegende Erfindung betrifft ein selbstlochendes, verdreh- und auspresssicher in ein Blech einpressbares Befestigungselement mit einem ringförmigen Körper, dessen dem Blech zugewandte Seite radial angeordnete Noppen aufweist, die sich beim Einsetzten in das Blech in dessen Oberfläche eindrücken und in dessen Mitte ein Innengewinde angeordnet ist, und das im gesetzten Zustand auf der dem Blech zugewandten Seite des ringförmigen Körpers eine umlaufende ringförmige Vertiefung aufweist, in die das beim Setzen verdrängte Blechmaterial eingepresst wird, wobei die Noppen gleichmäßig verteilt in dieser Vertiefung liegen.

Der hierzu nächstgelegene Stand der Technik ergibt sich aus der US-B-6 220 804, die bereits die oben genannten Merkmale aufweist. Befestigungselements gemäß diesem Stand der Technik können jedoch lediglich in relativ geringen Blechdickenbereichen eingesetzt werden, dass heißt, man benötigt auch für sehr wenig unterschiedlich dicke Bleche jeweils eigens konstruierte Befestigungselemente. Des weiteren ist die Verdreh- und Auspresssicherheit bei den Befestigungselementen gemäß dem Stand der Technik noch nicht optimal. Im übrigen weist das Befestigungselement gemäß dieser Entgegenhaltung einen polygonalen Körper (im Ausführungsbeispiel jeweils achteckig) auf. Die Noppen sind dort innen in der Nähe des sogenannten "Stanzkragens" deutlich ausgeprägt und laufen nach außen hin flach aus.

Ausgehend von diesem Stand der Technik ist es die Aufgabe der vorliegenden Erfindung, ein solches Befestigungselement dergestalt weiter zu entwickeln, dass es bei gleicher Geometrie in einem maximalen Blechdickenbereich mit hoher Verdrehund Auspresssicherheit eingesetzt werden kann, ohne dass ein vorheriges Lochen und eine besondere Vorbereitung der Löcher, in die das Befestigungselement eingesetzt werden soll, erforderlich ist.

Diese Aufgabe wird erfindungsgemäß durch die kennzeichnenden Merkmale des Hauptanspruchs 1 gelöst. Die Unteransprüche zeigen weitere vorteilhafte Ausführungsformen der Erfindung.

Gemäß dem Stand der Technik ist man bei bisherigen Lösungen davon ausgegangen, dass eine bestmögliche Verdreh- und Auspresssicherheit und Anwandungsbreite des Befestigungselementes dann erreicht wird, wenn zur Verriegelung gegen Verdrehen durchgehende Stege innerhalb der ringförmigen Vertiefung angeordnet werden und der Boden der ringförmigen Vertiefung parallel mit der zu verarbeitenden Blechoberfläche ausgebildet wird.

Dem gegenüber geht die vorliegende Erfindung davon aus, dass - zum Erreichen einer optimalen Verdrehsicherheit - noppenförmige Verriegelungselemente in einem maximalen Abstand zur Mittelachse angebracht sind und damit der wirkungsvollste Hebelarm gegen das Verdrehmoment am äußeren Stützkragen der ringförmigen Vertiefung genutzt wird.

Eine weiterer Vorteil der erfindungsgemäßen Lösung besteht darin, dass mit der Verlagerung der Verdrehsicherung, wie vorher beschrieben, und der geneigten Ausbildung des Bodens der ringförmigen Vertiefung an der inneren Begrenzung der ringförmigen Vertiefung - dem Stanzkragen - mehr Raum für das Eindringen des Schneidringes der Stanzprägematrize zur Verfügung steht, damit ist es möglich, große Blechdicken bzw. größere Blechdickenbereiche mit der erfindungsgemäßen Lösung zu verarbeiten.

Die erfindungsgemäße Abstimmung zwischen Stanzmatrizengeometrie und Ausführung der ringförmigen Vertiefung und der Art der Verdrehsicherung gewährleistet, dass nach dem Einpressen des Blechmaterials ein Festklemmen auf der Stanzprägematrize verhindert wird und damit eine sehr hohe Verarbeitungssicherheit gewährleistet wird.

In die bei der Fertigung der Teile erzeugten Hinterschnitte, sowohl am inneren Stanzkragen als auch am Stützkragen der ringförmigen Vertiefung, wird beim Einpressen der Teile Blechmaterial eingeformt, damit wird sichergestellt, dass auch bei der Verarbeitung in dünnen Blechen eine hohe Verdreh- und Auspresssicherheit des Befestigungselementes erreicht wird.

Die Ausbildung der Noppen kann sowohl kreisbogenförmig als auch scharfkantig (dreieckig) sein.

Im Folgenden wird die Erfindung anhand von beigefügten Zeichnungen näher erläutert.

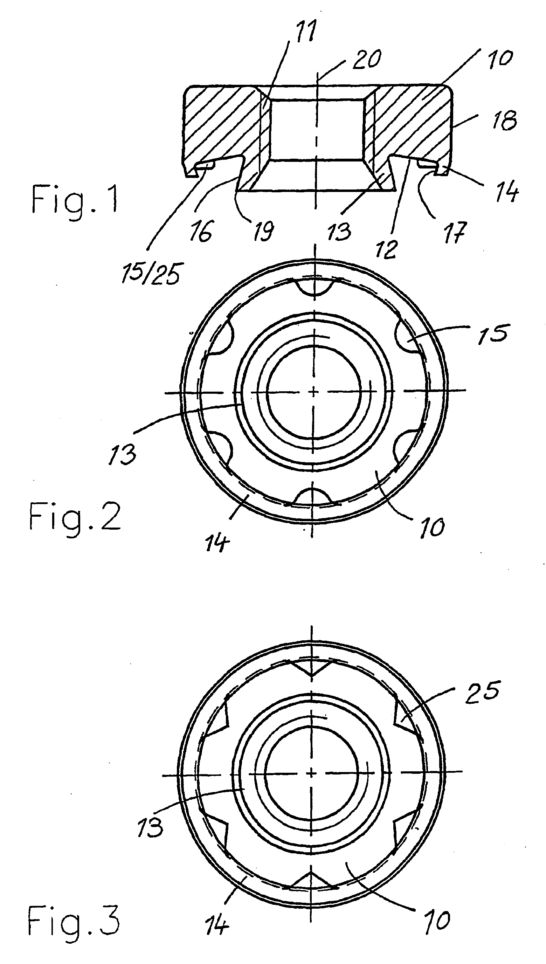

Fig. 1 zeigt ein erfindungsgemäßes Befestigungselement in Mutternform, aus einem ringförmigen Grundkörper (10). Im Zentrum des zylindrischen Befestigungselementes (10) befindet sich eine durchgehende Bohrung, die - zumindest über einen Teil der Höhe des Befestigungselementes (10) - in einem Gewinde (11) ausgebildet ist.

An der Unterseite ist das erfindungsgemäße Befestigungselement (10) mit einer ringförmigen Vertiefung (12) versehen, deren Bodenfläche von ihrer inneren Begrenzung - dem Stanzkragen (13) - zu ihrer äußeren Begrenzung - dem Stützkragen (14) - geneigt verlaufend ausgeführt ist. Innerhalb dieser ringförmigen Vertiefung (12) sind am äußeren Stützkragen (14) noppenförmige Verriegelungselemente (15) in regelmäßigem Abstand kreisförmig angebracht. Der Stanzkragen (13) ist mit einem Hinterschnitt (16) zur Achse (20) des erfindungsgemäßen Befestigungselementes (10) versehen und der Stützkragen (14) ist mit einem Hinterschnitt (17) zur äußeren Mantelfläche (18) des erfindungsgemäßen Befestigungselementes (10) versehen. Der Stanzkragen (13) ist mit einer Schneidkante (19) ausgebildet.

Fig. 2 zeigt das erfindungsgemäße Befestigungselement (10) der Fig. 1 von der Unterseite dargestellt. Die Form und Anordnung der noppenförmigen Verriegelungselemente (15) sind deutlich dargestellt. Die noppenförmigen Verriegelungselemente (15) sind am äußeren Stützkragen (14) angebracht und bilden zum Stanzkragen (13) einen Freiraum. In dieser Darstellung (Fig. 2) ist die Variante mit kreisförmig ausgebildeten noppenförmigen Verriegelungselementen (15) dargestellt.

Fig. 3 zeigt das erfindungsgemäße Befestigungselement (10) in der Ausführung mit scharfkantig (dreieckig) ausgebildeten noppenförmigen Verriegelungselementen (25).

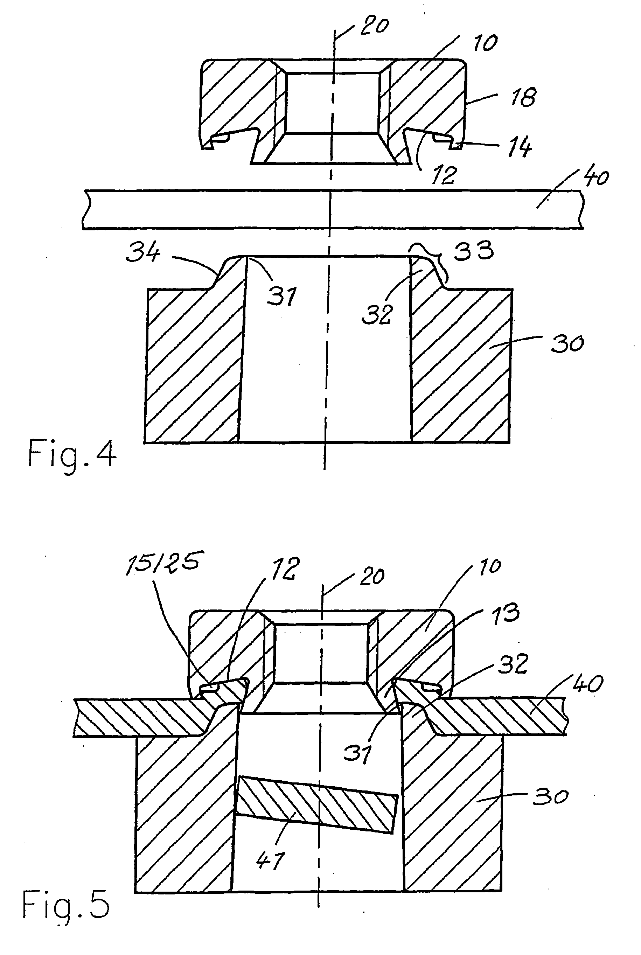

Fig. 4 zeigt das erfindungsgemäße Befestigungselement (10) nach Fig. 1, 2 und 3 sowie die Stanzprägematrize (30) und das Blechteil (40). In dieser Darstellung ist zu erkennen, das dass Blechteil (40) kein vorgefertigtes Loch und auch keine weitere Vorbereitung benötigt. Die Stanzprägematrize (30) ist mit einer Schneidkante (31) sowie mit einem Prägering (32) mit einer speziell ausgebildeten Geometrie (33) ausgeführt. Die äußere Mantelfläche (34) des Prägeringes (32) verläuft konisch zur Mittelachse (20) der Stanzprägematrize (30) Dies gewährleistet, dass nach dem Stanzen und Einpressen des Blechteils (40) in die ringförmige Vertiefung (12) ein Festklemmen des Prägeringes (32) im Blechteil (40) vermieden wird.

Fig. 5 zeigt das erfindungsgemäße Befestigungselement (10) nach Fig. 1 bis 3 kurz nach der Beendigung des Setzvorganges. Vom Stanzkragen (13) wurde im Zusammenwirken mit der Schneidkante (31) der Stanzprägematrize (30) ein Butzen (41) an dem Blechteil (40) ausgestanzt und Material des Blechteils (40) durch den Prägering (32) in die ringförmige Vertiefung (12) unter Umschließung der noppenförmigen Verriegelungselemente (15, 25) eingeformt. Der ausgelochte Butzen (41) wird nach unten aus der Stanzprägematrize (30) entsorgt.

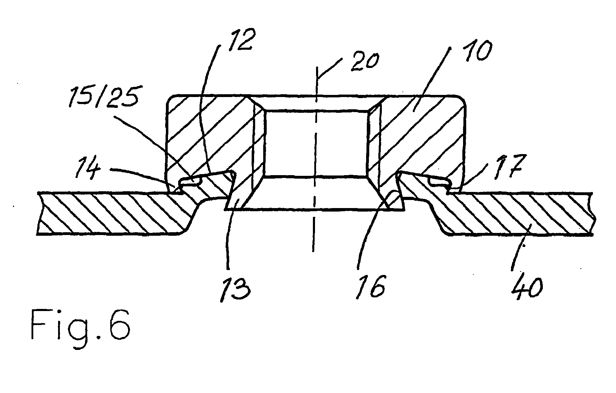

Fig. 6 zeigt das vollständig eingepresste erfindungsgemäße Befestigungselement (10) in einem Blechteil (40). Die Wirkung der Hinterschnitte (16 / 17) am Stanzkragen (13) und Stützkragen (14) ist deutlich zu erkennen. Die ringförmige Vertiefung (12) ist mit Material des Blechteils (40) gefüllt. Die noppenförmigen Verriegelungselemente (15, 25) sind in das Blechteil (40) eingebettet. Die positive Wirkung der geneigt nach außen verlaufenden Bodenfläche der ringförmigen Vertiefung (12), zur Vergrößerung der Wirkungslängen des Stanzkragens (13) und damit zur Vergrößerung der anwendbaren Blechdickenbereiche für das erfindungsgemäße Befestigungselement (10), ist deutlich zu erkennen.

## Patentansprüche

1. Selbstlochendes, verdreh- und auspresssicher in ein Blechteil (40) einpressbares Befestigungselement (10) mit einem Körper, dessen dem Blech zugewandte Seite radial angeordnete Noppen (15, 25) aufweist, die sich beim Einpressen in das Blechteil (40) eindrücken und damit das Befestigungselement (10) gegen Verdrehen sichern, wobei in der Mitte ein Innengewinde (11) angeordnet ist und es auf der im gesetzten Zustand dem Blechteil (40) zugewandten Seite eine Vertiefung (12) aufweist, wobei die Noppen (15, 25) gleichmäßig verteilt in dieser Vertiefung (12) liegen, **dadurch gekennzeichnet, dass** die Noppen (15, 25) am inneren Rand eines die Vertiefung (12) begrenzenden Kragens (14) angeordnet sind, und dass dieser die Vertiefung (12) am äußeren Rand begrenzende Kragen (14) zur Vertiefung (12) hin einen Hinterschnitt (17) aufweist, um Blechmaterial zur Verriegelung gegen ein axiales Ausdrücken aufnehmen zu können, und der Körper und die Vertiefung (12) ringförmig gestaltet sind, wobei die ringförmige Vertiefung (12) auf der dem Blechteil (40) zugewandten Seite zum Innengewinde (11) hin durch einen Stanzkragen (13) begrenzt wird, der so ausgebildet ist, dass er beim Setzen des Befestigungselementes (10) ein Loch mit seinem Durchmesser in das Blechteil (40) stanzt, und der Stanzkragen (13) zur ringförmigen Vertiefung (12) hin mit einem Hinterschnitt (16) versehen ist, in den beim Einpressen entstehendes Blechmaterial aufgenommen wird, um eine weitere Verriegelung des Befestigungselementes (10) gegen ein axiales Ausdrücken zu gewährleisten, und dass die Noppen (15, 25) zum Stanzkragen (13) hin einen Freiraum bilden.

2. Befestigungselement (10) nach Anspruch 1, **dadurch gekennzeichnet, dass** der Stanzkragen (13) in seiner Höhe der jeweils zu stanzenden Blechdicke des Blechteils (40) angepasst ist.

3. Befestigungselement (10) nach einem der Ansprüche 1 oder 2, **dadurch gekennzeichnet, dass** die Grundfläche der ringförmigen Vertiefung (12) von innen nach außen in Richtung des Blechteils (40) geneigt ist.

## Claims

1. Self-punching fastener (10), which in a way safe against rotation and pressing-out can be pressed into a metal sheet (40) and having an annular body, which, on the side facing the metal sheet, is having radially positioned projections (15, 25), which during the pressing-in are pressed into the metal sheet member (40) and thereby are securing the fastener (10) against rotation, wherein in the centre there is positioned an interior thread (11) and, wherein on the side facing the metal sheet member (40) in the set state there is provided an annular depression (12), wherein the projections (15, 25) are positioned evenly distributed in said depression (12), **characterised in that** the projections (15, 25) are positioned at the inner margin of a collar (14) limiting the depression (12) and that said collar (14) limiting the depression (12) at the exterior margin thereof is having an undercut (17) facing the depression (12) to receive material of the metal sheet for the locking against an axial pressing-out and that the body and the depression (12) are annularly shaped, wherein the annular depression (12) is limited on the side facing the metal sheet member (40) in the direction of the interior thread (11) by a punching collar (13) which is performed such that it is punching a hole into the metal sheet member (40) during the setting of the fastener (10) having the diameter of the punching collar (13) and that the punching collar (13) is having an undercut (16) facing the annular depression (12) in which metal sheet material occurring during the pressing-in is received to ensure a further locking of the fastener (10) against an axial pressing-out, and that the projections (15, 25) are forming a free space in the direction of the punching collar (13).

2. Fastener (10) according to claim 1, **characterised in that** the punching collar (13) is adapted to the gauge of the respective metal sheet member (40) to be punched with respect to its height.

3. Fastener (10) according to any of the claims 1 or 2, **characterised in that** the bottom face of the annular depression (12) is inclined from the interior to the exterior in the direction of the metal sheet member (40).

## Revendications

1. Elément de fixation (10) autoperforant, pouvant être enfoncé dans une pièce en tôle (40) de façon résistante à la torsion et à l'éjection avec un corps, dont le côté tourné vers la tôle présente des crans (15, 25) disposés radialement, qui s'enfoncent lors de l'enfoncement dans la pièce en tôle (40) et assurent ainsi l'élément de fixation (10) contre la torsion, un taraudage (11) étant disposé au centre et présentant une cavité (12) sur le côté tourné vers la pièce en tôle (40) dans l'état posé, les crans (15, 25) étant disposés avec une répartition uniforme dans cette cavité (12), **caractérisé en ce que** les crans (15, 25) sont disposés sur le bord intérieur d'une collerette (14) délimitant la cavité (12), et **en ce que** cette collerette (14) délimitant la cavité (12) sur le bord extérieur présente en direction de la cavité (12) une contre-dépouille (17) afin de pouvoir recevoir le matériau de tôle pour le verrouillage contre une éjection axiale, et le corps et la cavité (12) sont conçus avec une forme annulaire, la cavité (12) annulaire étant délimitée sur le côté tourné vers la pièce en tôle (40) en direction du taraudage (11) par une collerette estampée (13), qui est conçue de telle sorte que, lors de la pose de l'élément de fixation (10), elle découpe un trou avec son diamètre dans la pièce en tôle (40), et la collerette estampée (13) est pourvue en direction de la cavité (12) de forme annulaire d'une contre-dépouille (16) dans laquelle est réceptionné du matériau de tôle se formant lors de l'enfoncement, afin de garantir un nouveau verrouillage de l'élément de fixation (10) contre une éjection axiale, et **en ce que** les crans (15, 25) forment un espace libre en direction de la collerette estampée (13).

2. Elément de fixation (10) selon la revendication 1, **caractérisé en ce que** la collerette estampée (13) est adaptée dans sa hauteur à l'epaisseur de tôle à découper respectivement de la pièce en tôle (40).

3. Elément de fixation (10) selon l'une quelconque des revendications 1 ou 2, **caractérisé en ce que** la surface de base de la cavité (12) de forme annulaire est inclinée de l'intérieur vers l'extérieur en direction de la pièce en tôle (40).
